# EUROPEAN PATENT APPLICATION

(11) **EP 1 759 758 A1**
(43) Date of publication of application: **07.03.2007**
(21) Application number: 06016775.6
(22) Date of filing: 11.08.2006
(51) Int. Cl.: B01D 53/70

(54) **A process for destructively scrubbing methyl chloride gas**

(30) Priority: 06.09.2005 IT MI20051635
(71) Applicant: Dipharma S.p.A., 33036 Mereto di Tomba (Udine) (IT)
(72) Inventor: Razzetti, Gabriele, 20099 Sesto S. Giovanni (MI) (IT); Allegrini, Pietro, 20097 San Donato Milanese (MI) (IT)
(74) Representative: Minoja, Fabrizio

(57) **Abstract**

A process for destructively scrubbing methyl chloride gas by the reaction with a sulfated organic compound.

## Description

### FIELD OF THE INVENTION

The present invention relates to a novel process for scrubbing methyl chloride.

### TECHNOLOGICAL BACKGROUND

Methyl chloride is a highly toxic gas, that can be formed as a byproduct during various chemical reactions, such as in the conversion of a methylamino residue to urethane by means of ethyl chloroformate.

A number of process for scrubbing methyl chloride are known. For example, US 5,419,885 claims a process having several advantages over the prior art methods, but it also has the disadvantage of retaining all of the gas in solution. In particular, said patent discloses a scrubbing system consisting of a mixture of ethanolamine, water and a water-miscible solvent. Scrubbing is however efficient only until approx. 50% of loaded ethanolamine is consumed, as lower concentrations involve remarkably longer times for scrubbing all methyl chloride. It is therefore evident that there is still the need for a more efficient industrial process which uses less expensive reagents.

### SUMMARY OF THE INVENTION

The invention relates to a process for destructively scrubbing methyl chloride, making use of a scrubbing solution capable of dissolving methyl chloride at levels sufficient to capture the gas formed during industrial scale reactions. Said solution is capable of reacting with methyl chloride, transforming it into poorly toxic compounds which are easy to dispose.

### DETAILED DISCLOSURE OF THE INVENTION

The process of the invention comprises contacting methyl chloride gas with a scrubbing solution containing a salt of a sulfur-containing organic compound.

A salt can be for example a salt of an alkali or alkaline-earth metal with an organic compound preferably containing one or two sulfur atoms.

Examples of alkali or alkaline-earth metal are sodium, potassium, calcium or barium, particularly sodium.

Examples of sulfur-containing organic compounds are thiophenol, a C₁-C₄ alkyl-thiocarboxylic, C₁-C₄ alkyl-thiacarboxylic or (C₁-C₄ alkyl)₂-dithiocarbammic acid, preferably a (C₁-C₄ alkyl)₂-dithiocarbammic acid.

In the above indicated compounds, a C₁-C₄ alkyl group is e.g. methyl, ethyl, propyl, isopropyl or butyl, particularly methyl or ethyl, preferably methyl. In a (C₁-C₄ alkyl)₂ group each alkyl group, which can be the same or different, is for example as defined above, preferably methyl or ethyl.

Specific examples of salts of sulfur-containing organic compounds are sodium thiophenate, sodium methyl-thioacetate, sodium methyl-thiaacetate and preferably a sodium (C₁-C₄ alkyl)₂-dithiocarbamate, in particular sodium dimethyldithiocarbamate and sodium diethyldithiocarbamate, more particularly sodium dimethyldithiocarbamate.

The solvent of the scrubbing solution can be water or an organic solvent in which methyl chloride and the sulfur-containing organic compound salt are soluble, or a mixture of two or more of said organic solvents, or a mixture of one or more thereof with water. A mixture of organic solvents is preferably formed by two or three solvents.

An organic solvent can be, for example, an aromatic hydrocarbon, preferably toluene or xylene; an ether, preferably tetrahydrofuran or dioxane; an ester, preferably ethyl acetate or butyl acetate; a dipolar aprotic solvent, preferably dimethylformamide, dimethylacetamide, dimethylsulfoxide or N-methylpyrrolidone; a C₁-C₄ alkanol, preferably methanol or isopropanol; a nitrile, preferably acetonitrile; or a chlorinated solvent, preferably dichloromethane.

The solvent of the scrubbing solution is preferably water or a toluene-water, tetrahydrofuran-water, methanol-water or isopropanol-water mixture, particularly water, or a methanol-water or tetrahydrofuran-water mixture.

The mole ratio of the salt in the scrubbing solution to the methyl chloride to scrub typically ranges from 10:1 to 1:1, preferably approx. from 5:1 to 1.5:1, more preferably from 2:1 to 1.2:1.

The amount of solvent used in the scrubbing solution should be sufficient to completely dissolve methyl chloride in the reaction mixture, it varies depending on the solvent used, and is typically 1.2 to 5 volumes to the amount of salt. The amount of water in the scrubbing solution should preferably be sufficient to form a saturated solution of the sulfur-containing organic compound salt.

The following examples illustrate the invention.

### Example 1

A hermetically sealed reactor connected to a vessel containing 300 ml of dichloromethane at 0°C is loaded with 228 g of a 40% sodium dimethyldithiocarbamate aqueous solution. 4.7 g of methyl chloride are then bubbled into the solution, in 42 minutes. Methyl dimethyldithiocarbamate precipitates. No passage of gas into the dichloromethane solution is observed. After completion of bubbling, the solution content in the vessel is analyzed by NMR showing negligible amounts of methyl chloride.

### Example 2

A hermetically sealed reactor connected to a vessel containing 300 ml of dichloromethane at 0°C is loaded with 98 g of a 40% sodium dimethyldithiocarbamate aqueous solution and 200 ml of methanol. 4.7 g of methyl chloride are then bubbled into the solution, in 40 minutes. Methyl dimethyldithiocarbamate starts precipitating by the end of the addition. No passage of gas into the dichloromethane solution is observed. After completion of bubbling, the solution content in the vessel is analyzed by NMR showing negligible amounts of methyl chloride.

### Example 3

An hermetically sealed reactor connected to a vessel containing 150 ml of dichloromethane is loaded with 90 g of a 40% sodium dimethyldithiocarbamate aqueous solution and 72 g of tetrahydrofuran. A diphasic mixture forms. 7.2 g of methyl chloride are then bubbled into the solution, in 20 minutes. No passage of gas into the dichloromethane solution is observed. After completion of bubbling, the solution content in the vessel is analyzed by NMR showing negligible amounts of methyl chloride. A 7.1 g increase in the scrubbing mixture weight is observed. After 6 hours the organic phase is separated and the methyl dimethyldithiocarbamate is assayed by NMR (using 1,4 dimethoxybenzene as internal standard) showing an increase above 95% by mol to the starting methyl chloride.

### Example 4

An hermetically sealed reactor connected to a vessel containing 150 ml of dichloromethane is loaded with 60 g of sodium diethyldithiocarbamate trihydrate and 140 ml of water. 72 g of tetrahydrofuran were added to the mixture. 7.0 g of methyl chloride are then bubbled into the solution, in 20 minutes. No passage of gas into the dichloromethane solution is observed. After completion of bubbling, the solution content in the vessel is analyzed by NMR showing negligible amounts of methyl chloride. A 6.9 g increase in the scrubbing mixture weight is observed. After 6 hours the organic phase is separated and the methyl diethyldithiocarbamate is assayed by NMR (using 1,4 dimethoxybenzene as internal standard) showing an increase above 95% by mol to the starting methyl chloride.

## Claims

1. A process for destructively scrubbing methyl chloride comprising contacting methyl chloride gas with a scrubbing solution containing a salt of sulfur-containing organic compound.

2. The process according to claim 1, wherein said salt is a salt of an alkali or alkaline-earth metal with an organic compound containing one or two sulfur atoms.

3. A process according to claims 1 or 2, wherein said organic compound is thiophenol, a C₁-C₄ alkyl-thiocarboxylic, C₁-C₄ alkyl-thiacarboxylic or (C₁-C₄ alkyl)₂-dithiocarbammic acid.

4. A process according to claims 1 or 2, wherein the organic compound salt is sodium thiophenate, sodium methylthioacetate, sodium methylthiaacetate or a sodium (C₁-C₄ alkyl)₂-dithiocarbamate.

5. A process according to claim 1, wherein the scrubbing solution solvent is water or an organic solvent in which methyl chloride and the sulfur-containing organic compound salt are soluble, or a mixture of two or more thereof or a mixture of one or more thereof with water.

6. A process according to claim 5, wherein the organic solvent is an aromatic hydrocarbon; an ether; an ester; a dipolar aprotic solvent; a C₁-C₄ alkanol; a nitrile, or a chlorinated solvent.

7. A process according to claim 5, wherein the solution solvent is water, or a toluene-water, tetrahydrofuran-water, methanol-water or isopropanol-water mixture.

8. A process according to claim 7, wherein the solvent is water, or a methanol-water or tetrahydrofuran-water mixture.

9. A process according to claim 1, wherein the mole ratio of salt in the scrubbing solution to methyl chloride to scrub ranges from 10:1 to 1:1.

10. A process according to claim 1, wherein the amount of solvent used in the scrubbing solution is sufficient to completely dissolve methyl chloride and sulfur-containing organic compound salt.

11. A process according to claim 10, wherein the amount of solvent ranges from 1.2 to 5 volumes with respect to the salt amount.

12. A process according to claim 10, wherein the scrubbing solution contains a sufficient water amount to generate a saturated solution of the sulfur-containing organic compound salt.
